# EUROPEAN PATENT APPLICATION

(11) **EP 4 796 880 A1**
(43) Date of publication of application: **26.08.2026**
(21) Application number: 25159617.7
(22) Date of filing: 24.02.2025
(51) Int. Cl.: F27B 7/20, F27B 7/34, F27B 7/36, F27D 11/00, F27D 17/10, F27D 17/20, C04B 7/36, C04B 7/43, C04B 7/46, C04B 7/47

(54) **CLOSED LOOP CALCINATION SYSTEM**

(71) Applicant: Siemens Energy Global GmbH & Co. KG, 81739 München (DE)
(72) Inventor: Kumar, Navlok, Abu Dhabi (AE); Kolhe, Pushkar, Abu Dhabi (AE); Alameri, Asmaa Fahad, Abu Dhabi (AE)

(57) **Abstract**

A manufacturing system and method where a fluid path is formed between a pre-heating section, a waste heat recovery section, a cooling section, a reactor section, the calcining section, and back to the pre-heating section, wherein a fluid, specifically carbon dioxide, is circulated and used within path while also capturing any generated carbon dioxide.

## Description

### BACKGROUND

Manufacturing processes, such as calcination processes are used to convert raw material into finished product using heat. "Calcination" refers to a thermal treatment of a material that involves heating the material to cause decomposition, oxidation or reduction without melting the material. The calcination process causes a chemical transformation of the material. The process may involve the removal of volatile substances, strengthening of the material through oxidation, or preparation of a catalytic surface. One such process is used to convert raw materials into cement. These processes often generate carbon dioxide as part of the process. In addition, existing systems often used combustion as the source of heat to facilitate the process. Thus, these manufacturing processes can be a significant source of carbon dioxide emissions.

### SUMMARY

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms (i.e., one or more) as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, terms such as "first", "second", "third" and so forth may be used herein to refer to various elements, information, functions, or acts, but should not be considered as limiting in any way. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

The phrases "connect" and "connected", and derivations thereof, may mean directly attached, indirectly attached or fluidly communicable with. In addition, the term "adjacent to" may mean that an element is relatively near to but not in contact with a further element or that the element is in contact with the further portion unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

The manufacturing system and method addresses carbon dioxide emissions by using carbon dioxide as the heating fluid in a closed loop system while also capturing any generated carbon dioxide. It is possible to retain the capabilities of traditional system and reduce or eliminate carbon dioxide emissions. Furthermore, a reduction in the net electrical energy required for the overall manufacturing process may be achieved. The manufacturing system and method are scalable and flexible. Existing systems can be retrofitted to the manufacturing system.

The manufacturing system includes a carbon dioxide storage, a pre-heating section, a calcining section, a reactor section, a cooling section, and a waste heat recovery section. The pre-heating section is connected to the calcining section that is connected to the reactor section. The reactor section is connected to the cooling section that is connected to the waste heat recovery section. The waste heat recovery section is connected to the pre-heating section completing a closed loop. The closed loop connections form a fluid path in the manufacturing system between the pre-heating section, the waste heat recovery section, the cooling section, the reactor section, the calcining section, and back to the pre-heating section. wherein a fluid, specifically carbon dioxide, is circulated and used within the fluid path. The carbon dioxide storage is connected to the waste heat recovery section wherein generated carbon dioxide is stored. The various sections and the fluid flow are described in more detail below.

In the various sections, contaminants may be introduced to the fluid. It may be desirable to remove the contaminants. To this end, contaminant removal equipment to remove particles from the fluid may be used. For example, a de-duster may be included to remove dust or a pollution control equipment like fabric filters, electrostatic precipitators, etc. may be used to remove fine particles.

The pre-heating section includes a feed and one or more pre-heaters. Typically, the pre-heaters are arranged vertically in a series such that a first pre-heater receives the raw material from the feed and directs that raw material to a second pre-heater which in turn directs the raw material to an nth pre-heater, until a last pre-heater is reached. Thus, the pre-heaters may be serially connected to each other with the first of the serially connected pre-heaters connected to the feed. Such a vertical arrangement provides for a gravitational assisted feed of the raw material. Other arrangements, including a parallel configuration, or combination of parallel and serially connected pre-heaters is possible. Common pre-heaters types including shaft, shaft-cyclone and cyclone models in various sizes and designs. Other pre-heater types may be used as well. When a plurality of pre-heaters is employed, different types may be used in the plurality of pre-heaters or the plurality of pre-heaters may all be the same type. The pre-heater partially thermally decomposes the raw material that is then fed to the calcining section.

The calcining section, which is connected to the pre-heating section, includes one or more calciner also known as pre-calciners. Similarly to the pre-heaters, multiple calciners may be connected in serial, parallel or combination thereof. Typically, the first of the series of calciners or the single calciner is connected the last of the series of pre-heaters or the single pre-heater. Various types of calciners may be used. For example, but not limited to, spiral-flow, spouted, suspension, and a fluidized bed types. The calciner provides a greater decomposition the raw material than the pre-heater. The raw material from calcining section is fed to the reactor section. Furthermore, a heated fluid, i.e., heated carbon dioxide, is supplied to the calcining section by the reactor section as described in more detail below. The heated carbon dioxide may be in a temperature range of 950°C - 1850°C. It may be desirable for the upper range to be reduced, requiring less energy, wherein the temperature of the heated carbon dioxide to be between 650°C - 1050°C. The heated carbon dioxide generally flows in reverse of the raw material. The heated carbon dioxide is hotter where it enters the calcining section than where it exits the pre-heating section. The heated carbon dioxide that exits the pre-heating section, referred to herein as waste heat, is fed to the waste heat recovery section. The waste heat exiting the pre-heating section is typically between 250°C and 500°C.

The fluid path includes a path between the pre-heating section 102 and the waste heat recovery section 110. The waste heat recovery section, which is connected the pre-heating section to receive the waste heat, includes an auxiliary that utilizes the heated fluid, i.e., heated carbon dioxide, at a lower temperature than used by reactor section or calcining section. For example, a Raw Mill, Cement Mill, and Clay Mill. The waste heat emitted from the auxiliary is generally in the range of 80°C-240°C.

The auxiliary may introduce a contaminant in the waste heat, in which case a contaminant removal equipment may be arranged to receive the waste heat emitted from the auxiliary. Typically, the contaminant removal equipment has no or negligible effect on the temperature of the fluid. Thus, the waste heat emitted from the contaminant removal equipment is generally the same as what was emitted from the auxiliary that is connected to the contaminant removal equipment. However, it is understood that in an embodiment, the contaminant removal equipment may increase or decrease the temperature of the waste heat.

When the manufacturing system reaches full capacity, the excess carbon dioxide that is released in calcination process, is stored in the carbon dioxide storage. A carbon dioxide storage is connected to the waste heat recovery section, wherein excess carbon dioxide from the waste heat exiting the waste heat recovery section is stored. Typically, the carbon dioxide storage is connected to the waste heat recovery section via the auxiliary or the contaminant removal equipment.

It may be desirable or necessary to cool the waste heat exiting from the pre-heating section, at about 250°C to 500°C, prior to feeding it to the auxiliary. To accomplish this cooling, the waste heat recovery section may include a heat exchanger, such as a recuperator, to receive the waste heat from the pre-heating section and cool said heat that is subsequently fed to the auxiliary. Accordingly, the fluid path between the pre-heating section 102 and the waste heat recovery section 110 includes a path formed between the pre-heating section to heat exchanger and subsequently to the auxiliary. A common temperature of the waste heat exiting the heat exchanger is between 160°C to 270°C.

The heat exchanger uses a working fluid to cool the waste heat. Advantageously, the closed loop system may use the waste heat exiting the auxiliary or the contaminant removal equipment as the working fluid. Since the waste heat exiting the auxiliary or the contaminant removal equipment is cooler than the waste heat exiting the pre-heating section it can be the working fluid to cool the waste heat prior it being fed to the auxiliary. Heat from the waste heat is transferred to the working fluid, wherein the working fluid exiting the heat exchanger, typically between 150°C and 470°C, is hotter than the working fluid entering the heat exchanger, typically between 80°C and 240°C. The fluid path is configured for the heat exchangers to receive the waste heat from the auxiliary to be used as a working fluid for the heat exchanger to cool the waste heat from the pre-heating section. The working fluid exiting the heat exchanger is fed to the cooling section or reactor section as described below.

The reactor section includes a heat source and a chamber. A non-combustion heat source such as an electrically powered heat source may be used. Non-combustion heat sources are preferred because they do not generate additional carbon dioxide locally within the manufacturing system such that the system is capable of capturing generated carbon dioxide from the manufacturing system without being overwhelmed by the emissions of a combustion source. Of course, if a combustion-based heat source is employed, the manufacturing system may be arranged to capture that additional carbon dioxide. Examples of suitable non-combustion heat sources include Turbo Heaters that heat a fluid or large electric heaters and in particular megawatt scale induction heaters that can be used to heat a fluid.

The chamber includes an inlet end and an outlet end. The raw material flows into the chamber where it is transformed via a final calcination into a finished product and then exits out of the chamber at the outlet end to the cooling section. Sintering may also occur in the chamber. "Sintering" is a thermal process that involves heating a material below the melting point to coalesce the material into a solid or porous mass. The inlet end of the chamber is connected to the calcining section to receive the raw material. The outlet end of the chamber is connected to the heat source to receive the heated carbon dioxide to facilitate the calcination or sintering. The temperature of the heated carbon dioxide from the heat source to the outlet end may be in the range 950°C - 1850°C. One type of chamber is a rotary kiln that is a cylindrical component that is slightly declined from the horizontal between the inlet end and the outlet end and rotates slowly around its longitudinal axis.

The reactor section feeds the heated carbon dioxide to the calcining section. This may be done by at least one of a heat source or exhaust from the chamber exiting from the inlet end. In the case of the heat source, it may be the same heat source used to feed heated carbon dioxide to the chamber or a separate heat source.

A cooling section is connected to the reactor section to receive the finished product. The cooling sections includes a cooler that has an inlet side and an outlet side, and a number of fans. The finished product formed in the chamber enters the inlet side of the cooler where it is cooled by a recycled fluid blown in from a number of fans. The cooled finish product exits the chamber via the outlet side. A first cooler exhaust exits the cooler via the inlet side to the chamber that is then fed to the calciner. A second cooler exhaust may exit at or near the outlet side. The second cooler exhaust is fed to the heat source as a fuel supply or back into the cooler as a coolant. The second cooler exhaust may be fed through a contaminant removal equipment prior to being fed to the heat source or cooler. A second cooler exhaust exits from the cooler, at a temperature of 180°C to 320°C.

The working fluid exiting from the heat exchanger may be fed into the heat source to be reheated. This may be especially advantageous when a separate heat source is used for the calcining section than for the reactor section, where the heat source connected to the calciner reactor section receives the working fluid and the heat source connected to the chamber receives the exhaust from the cooler. Of course, this may be reversed so that the heat source connected to the calciner reactor section receives the exhaust from the cooler and the heat source connected to the chamber receives the working fluid.

Exhaust, in the range of 180°C to 320°C. from the cooler is fed back into the cooler as a cooling medium. Typically, the exhaust is fed into the cooler at the inlet section. Prior to feeding the exhaust on to the cooler it may be fed through a contaminant removal equipment.

The working fluid, or waste heat exiting the waste heat recovery section may be fed into the cooler as a cooling medium. The working fluid or waste heat may be fed into or towards the the outlet end of the cooler. Of course, it is possible that the working fluid or waste heat may be fed into or towards the inlet end of the cooler.

Fans 134 may be used to circulate the fluid along the fluid path.

During operation the raw material is fed to the feed and subsequently to the pre-heating section followed by the calcining section, the chamber in the reactor section and to the cooler in the cooling section, wherein a finished product is formed from the raw material via a calcination or a sintering process. The heated carbon dioxide from the non-combustion heat source is fed to the outlet end of the chamber and to the calciner in the calcining section. A first cooler exhaust and a reactor exhaust is fed to the calciner, wherein the fed heated carbon dioxide and exhaust provides the heat for the calcination or sintering process. The carbon dioxide is fed via the fluid path formed between the pre-heating section, the waste heat recovery section, the cooling section, the reactor section, the calcining section, and back to the pre-heating section, wherein the carbon dioxide, is circulated and used within the fluid path. The generated carbon dioxide is captured in the carbon dioxide storage.

In an embodiment of the method, the combination of the heated carbon dioxide and the exhausts is fed through the pre-heating section to a heat exchanger and subsequently an auxiliary, as the waste heat, in the waste heat recovery section. The waste heat from the auxiliary is to the heat exchanger as a working fluid to cool the waste heat fed to the heat exchanger. A second cooler exhaust is fed to the heat source as a carbon dioxide source to be heated and fed into the manufacturing system. The working fluid from the pre-heating section and the second cooler exhaust are fed into the cooler as cooling fluids. In embodiment, the second cooler exhaust is fed into the cooler at area that is hotter in the cooler than where the working fluid is fed into. To this end, the second cooler exhaust may be fed into or towards the inlet side of the cooler and the working fluid may be fed into or towards the outlet side of the cooler.

In another embodiment of the method, the combination of the heated carbon dioxide and the exhausts is fed through the pre-heating section to the auxiliary, as the waste heat, in the waste heat recovery section. The waste heat is fed from the pre-heating section to the cooler. A second cooler exhaust is fed to the heat source as a carbon dioxide source to be heated and fed into the manufacturing system. A second cooler exhaust is fed into the cooler as a cooling fluid. In embodiment, the second cooler exhaust is fed into the cooler at area that is hotter in the cooler than where the waste heat is fed into. To this end, the second cooler exhaust may be fed into or towards the inlet side of the cooler and the waste heat may be fed into or towards the outlet side of the cooler.

### BRIEF DESCRIPTION OF THE DRAWINGS

To easily identify the discussion of any particular element or act, the most significant digit or digits in a reference number refer to the figure number in which that element is first introduced.
FIG. 1 - FIG. 5 illustrates different embodiments of a manufacturing system.

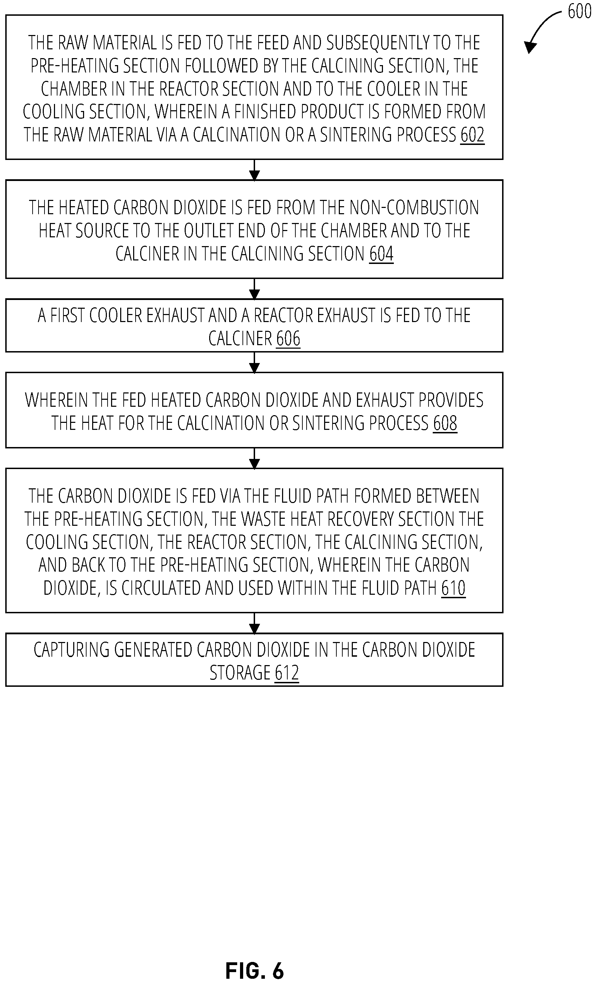

FIG. 6 illustrates a routine 600 in accordance with one embodiment.

### DETAILED DESCRIPTION

Calcination is a thermal treatment process that involves heating solid materials to high temperatures, typically between 700°C and 1200°C, in a controlled environment with limited or no oxygen supply. This process is primarily used to induce chemical changes in the material, such as the removal of volatile substances, moisture, or the thermal decomposition of compounds. A common use of the calcination process is the conversion of calcium carbonate (limestone) into calcium oxide (quicklime) and carbon dioxide gas during the manufacture of cement.

Calcination has several objectives including the goal of decomposing compounds, particularly carbonates, into their oxides. For example, the reaction for calcium carbonate is:

CaCO3(*s*)→CaO(*s*)+CO2(*g*).

The calcination process also helps in purifying materials by removing impurities and volatile components. In addition, calcination can lead to the oxidation of certain materials, facilitating further chemical reactions necessary for various industrial applications.

As is well known, calcination is widely used in various industries, including the conversion of limestone to lime for cement manufacturing, the extraction of metals from their ores, particularly when the ores are in the form of carbonates or sulfates, and in the processing of materials like bauxite (to produce alumina) and gypsum (to produce plaster) by removing water of crystallization. In addition, calcination could be used for the regeneration of quick lime from lime mud in the pulp and paper industry.

During cement production, an intermediary step of clinker production is often performed. A cement clinker is a crucial intermediary product in the production of Portland cement. It is formed by heating a mixture of limestone and aluminosilicate materials, such as clay, in a rotary kiln at high temperatures, typically between 1400°C and 1500°C. This process, known as sintering, results in the formation of small, hard nodules or lumps (clinkers) that range in size from approximately 3 mm to 25 mm in diameter.

For the specific application of forming Portland cement, the composition of the clinker typically falls within the following ranges:
- Lime (CaO): 60% to 65%
- Silica (SiO₂): 17% to 25%
- Alumina (Al₂O₃): 3% to 8%
- Magnesia (MgO): 1% to 3%
- Iron Oxide (Fe₂O₃): 0.5% to 6%
- Calcium Sulfate (Gypsum): 0.1% to 0.5%
- Sulfur Trioxide (SO₃): 1% to 3%.

These components influence the properties of the resulting cement, such as its strength and setting time. Of course, other ranges are possible and will not affect the operation of the system described herein.

In foregoing compounds may further be found in the forms of Alite (Ca₃SiO₅) which is the primary mineral phase, contributing to the strength of the cement, Belite (Ca₂SiO₄) which is another calcium silicate that hydrates more slowly than alite, affecting the long-term strength, Tricalcium Aluminate (Ca₃Al₂O₆) which contributes to the early strength of the cement but can lead to flash setting if not controlled, and Calcium Aluminoferrite (Ca₂(Al,Fe)₂O₅) which plays a role in the color and setting properties of the cement.

The production of clinker involves the sintering of these minerals, which aggregate together without melting completely, forming nodules (or clinkers) typically between 3 mm and 25 mm in diameter. After cooling, each clinker is ground into a fine powder and mixed with gypsum to produce cement. The gypsum regulates the setting time and enhances the compressive strength of the cement. Due to its durability and ability to be stored for extended periods without quality loss, clinker is often traded internationally, particularly in regions where raw materials for cement are scarce. In summary, clinker is a fundamental material in cement production, serving as the backbone for various types of cement used in construction. Its composition and processing conditions directly affect the quality and characteristics of the final cement product.

The figures illustrate embodiments of a manufacturing system such as a calcination process suitable for use in converting raw materials into finished products. The manufacture of cement is an example of a calcination process in which raw materials can be converted to "clinkers" as a finished product. While the figures will be described as a cement manufacturing process, one of ordinary skill in the art will realize that the illustrated arrangement, or similar arrangements could be used in the production of other finished products using other raw materials.

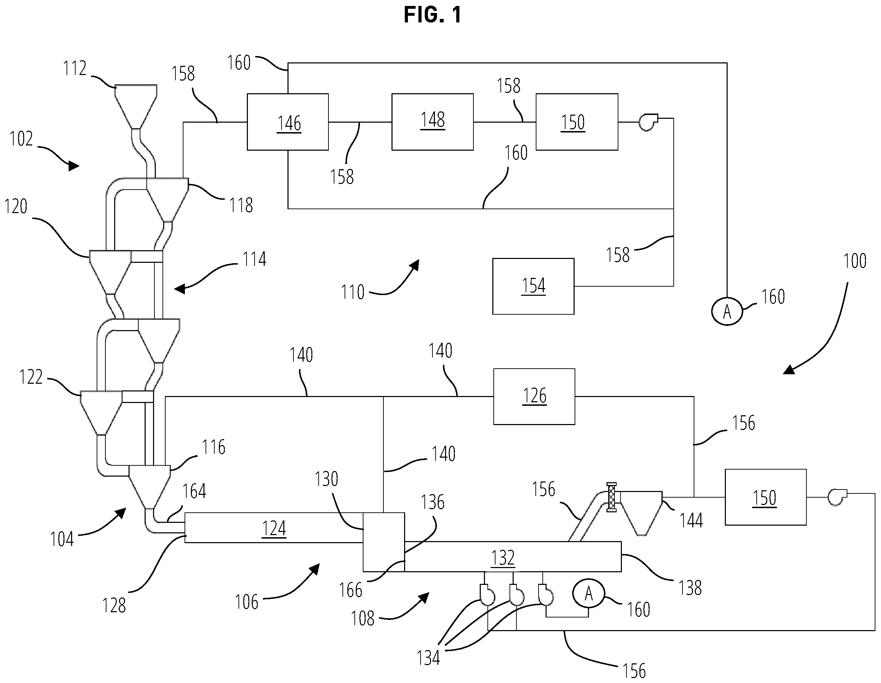

FIG. 1 schematically illustrates a cement manufacturing process. The manufacturing system 100 of FIG. 1 includes a pre-heating section 102, calcining section 104 that is connected to the pre-heating section 102, a reactor section 106 connected to the calcining section 104, a reactor section 106 connected to the calcining section 104, a cooling section 108 connected to the reactor section 106, and a waste heat recovery section 110 connected to the pre-heating section 102 and connected to the cooling section 108 forming a closed system.

The pre-heating section 102 illustrates a plurality of pre-heaters 114 arranged vertically in a series and a calciner 116. The first pre-heater 118 is connected via a feed 112 and to a second pre-heater 120 which in turn connected to the next pre-heater and so forth, until a last pre-heater 122 is reached. The last pre-heater 122 is connected to a calcining section 104 that includes a calciner 116 that is further connected to the reactor section 106.

The reactor section 106 includes a rotary kiln 124 and a non-combustion heat source 126. The rotary kiln 124 includes an inlet end 128 and an outlet end 130. The inlet end 128 is connected to the calciner 116 and the outlet end 130 is connected to the cooling section 108. The non-combustion heat source 126 is connected the outlet end 130 of the rotary kiln 124 and is connected to the calciner 116.

The cooling section 108 includes a cooler 132, a plurality of fans 134, a de-duster 144, and a pollution control equipment 150. The cooler 132 includes an inlet side 136 that is connected to the outlet end 130 of the rotary kilns 124 and an outlet side 138. The cooler 132 is connected to the de-duster 144. The de-duster is connected to the non-combustion heat source 126 and to the pollution control equipment 150. The pollution control equipment 150 is connected to the cooler 132 via a number of fans 134.

The waste heat recovery section 110 includes a heat exchanger 146, an auxiliary 148, pollution control equipment 150, and carbon dioxide storage 154. The heat exchanger 146 is connected to the first pre-heater 118, to the auxiliary 148, and to the cooling section 108. The auxiliary 148 connects to the pollution control equipment 150, which connects to the heat exchanger 146 and the carbon dioxide storage 154.

A fluid path is formed in the manufacturing system between the pre-heating section, the waste heat recovery section, the cooling section, the reactor section, the calcining section, and back to the pre-heating section.

During operation of the manufacturing system 100 a raw material enters the manufacturing system 100 via the feed 112. The first pre-heater 118 receives a raw material via the feed 112 and directs the raw material to the second pre-heater 120 which in turn directs the raw material to an nth pre-heater, until the last pre-heater 122 is reached. The raw material is fed from the last pre-heater 122 to calciner 116 and then to the inlet end 128 of rotary kiln 124. As the rotary kiln 124 rotates, the feed 112 moves downward toward the outlet end 130 of the rotary kiln 124. As the feed 112 moves along the rotary kiln 124 it is transformed to a clinker that exits the rotary kiln 124 via the outlet end 130 to the inlet side 136 of the cooling section 108. The non-combustion heat source 126 provides a heated carbon dioxide 140 to the outlet end 130 of the rotary kiln 124, for calcination and sintering the raw material fed to the rotary kiln 124, whereby forming the clinker that is then cooled by the cooling section 108. The reactor exhaust 164 is fed to the calciner 116.

The cooler 132 receives the clinker at an inlet side 136, wherein the clinker is cooled and the cooled clinker exits at the outlet side 138. A first cooler exhaust 166 is fed to the rotary kiln 124.

In addition to feeding the heated carbon dioxide 140 to the rotary kiln 124, the heated carbon dioxide 140 is fed to calciner 116. The carbon dioxide exhaust from the calciner 116 is fed to the last pre-heater 122, which is fed to nth pre-heater until the first pre-heater 118 is reached. Thus, the temperature of the exhaust exiting each pre-heating component being cooler than an exhaust received by the respective component. The waste heat 158 is cooler than the heated carbon dioxide 140.

A second cooler exhaust 156 exits from the cooler 132, at or towards the outlet side 138, and enters the de-duster 144 where clinker dust is removed from the second cooler exhaust 156. Subsequently, the second cooler exhaust 156 is fed to the non-combustion heat source 126 to be reheated and is fed to the rotary kiln 124 as a heating fluid. Prior to feeding the second cooler exhaust 156 to the cooler 132, fine particles are removed via pollution control equipment 150. After the fine particles are removed the second cooler exhaust 156 is fed back into the cooler 132, via a number of fans 134. The working fluid 158, which is described in more detail below, is fed into the cooler 130, via a number of fans 132. The second cooler exhaust 156 and the working fluid 160, which are both cooler than the clinker in respective section of cooler 130, thereby cooling the clinker.

A waste heat 158 is fed from the first pre-heater 118 to the waste heat recovery section 110, wherein the heat exchanger 146 cools the waste heat 158 by transferring heat from the waste heat 158 to a working fluid 160. The working fluid 160 heated in the heat exchanger 146 and the working fluid 160 exiting the heat exchanger 146 is hotter than the working fluid 160 entering the heat exchanger 146. The working fluid 160 having been heated is fed to the cooler 132 via fans 134.

The waste heat 158 that is cooled by the heat exchanger 146 is provided to the auxiliary 148 to operate the raw mill. The exhaust from the auxiliary 148 is fed to the pollution control equipment 150 to remove fine particles. As the waste heat 158 flows downstream from the pre-heating section 102 to the pollution control equipment 150 the waste heat 158 becomes cooler. The exhaust from the pollution control equipment 150 is fed into the heat exchanger 146 as the working fluid 160. Additionally, excess carbon dioxide from the waste heat 158 exiting the pollution control equipment 150 is sequestered in carbon dioxide storage 154.

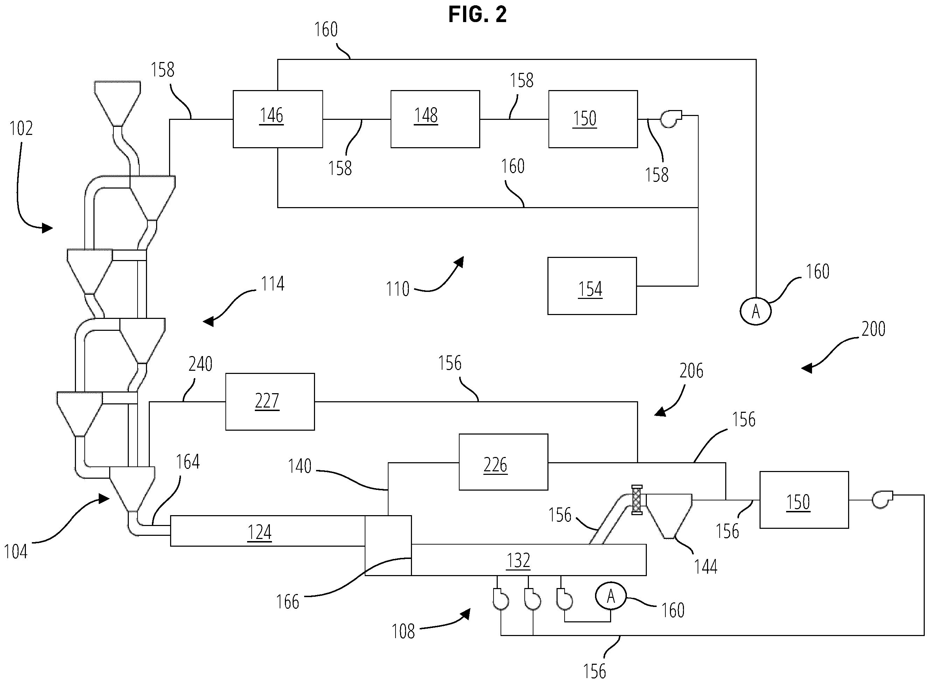

FIG. 2 schematically illustrates, a further embodiment of a cement manufacturing process. The manufacturing system 200 of FIG. 2 includes the carbon dioxide storage 154, the pre-heating section 102, the calcining section 104, the cooling section 108, the waste heat recovery section 110, and a reactor section 206. The reactor section 106 of FIG. 1 uses the same non-combustion heat source 126 to provide heated carbon dioxide 140 to the rotary kiln 124 and to the 116. In contrast to having a shared non-combustion heat source 126, the reactor section 206 of FIG. 2 includes a first non-combustion heat source 226 connected to the rotary kiln 124, and a second non-combustion heat source 227 connected to the calciner 116.

During the operation of the manufacturing system 100 of FIG. 1, the heated carbon dioxide 140 is provided to the outlet end 130 of the rotary kiln 124 and to the calciner 116. In contrast, during the operation of the manufacturing system 200 of FIG. 2, the heated carbon dioxide 140 from first non-combustion heat source 226 is provided to the outlet end 130 of the rotary kiln 124 and a heated carbon dioxide 240 from the second non-combustion heat source 227 is provided to the calciner 116. The second cooler exhaust 156 that exits the de-duster 144 is fed to the pollution control equipment 150, the non-combustion heat source 126, and the second non-combustion heat source 227. The second cooler exhaust 156 is reheated in the non-combustion heat source 126 prior to being fed into the rotary kiln 124 and is reheated in the second non-combustion heat source 227 prior to being fed into the calciner 116.

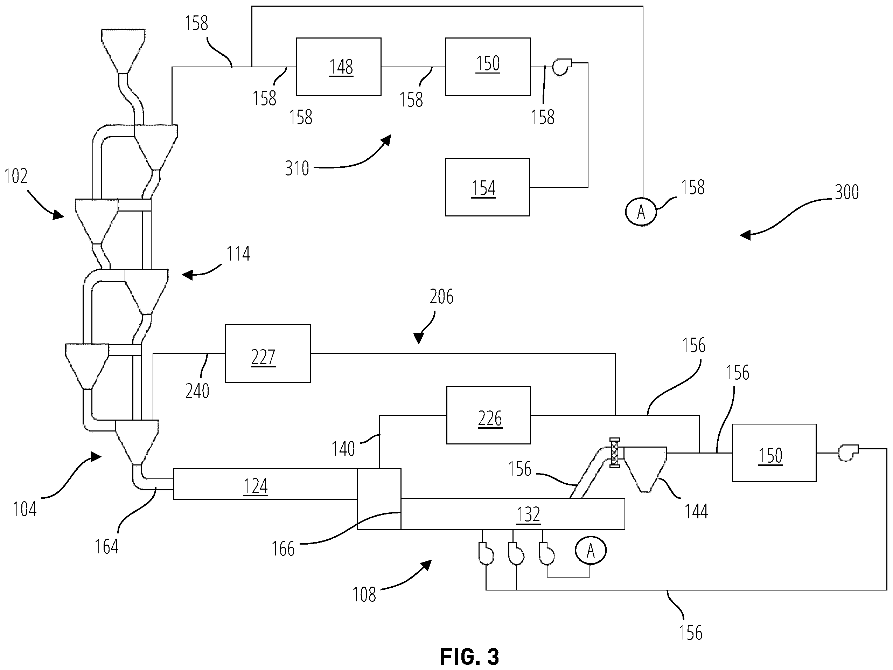

FIG. 3 schematically illustrates, a further embodiment of a cement manufacturing process. The manufacturing system 300 of FIG. 3 includes the carbon dioxide storage 154, the pre-heating section 102, the calcining section 104, the cooling section 108, a waste carbon dioxide heat recovery section 310, and a reactor section 206. In contrast to the waste heat recovery section 110, of FIG. 1 and FIG. 2, the waste carbon dioxide heat recovery section 310 excludes heat exchanger 146. As illustrated in FIG. 3, the waste heat 158 is directed to the auxiliary 148 and to the cooler 132.

During the operation of the manufacturing system 300 of FIG. 3, the waste heat 158 is fed to the auxiliary 148, and to the cooling section 108 as a cooling fluid. Additionally, a second cooler exhaust 156 from the cooler 132 is fed into the cooler 132 as a cooling fluid.

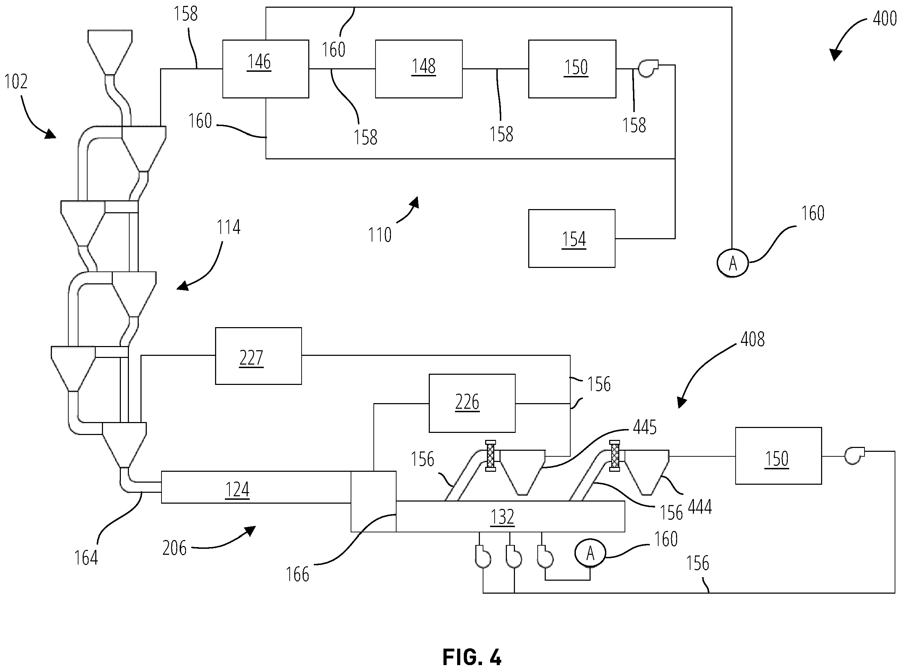

FIG. 4 schematically illustrates, a further embodiment of a cement manufacturing process. The manufacturing system 400 of FIG. 4 includes the carbon dioxide storage 154, the pre-heating section 102, the calcining section 104, a cooling section 408, the waste heat recovery section 110 and the reactor section 206. In contrast to the cooling section 108 of FIG. 3, which has a single de-duster that is connected to the pollution control equipment 150 and to the non-combustion heat sources, the cooling section 408 includes a first de-duster 444 connected to the cooler 132 and to the pollution control equipment 150, wherein the first de-duster 444 receives a second cooler exhaust 156 from the cooler 132, removes clinker dust from the second cooler exhaust 156, and subsequently feeds the second cooler exhaust 156 to the pollution control equipment 150 to remove further particles. The second cooler exhaust 156 is then fed back into the cooling section 108 as a cooling fluid. The cooling section 408 includes a second de-duster 445 connected to the cooler 132, wherein the second de-duster 445 receives a second cooler exhaust 156 from the cooler 132, removes clinker dust from the second cooler exhaust 156, and subsequently feeds the second cooler exhaust 156 to the first non-combustion heat source 226 and to second non-combustion heat source 227 to be reheated.

During operation of the manufacturing system 400 of FIG. 4, the second cooler exhaust 156 is fed through separate first de-dusters 444, 445 to provide separate fluid paths for the second cooler exhaust 156. The second cooler exhaust 156 is fed back to the cooling section 108 via a first de-duster 444 and a pollution control equipment 150. The second cooler exhaust 156 is also fed to the first non-combustion heat source 226 and second non-combustion heat source 227 via a second de-duster 445.

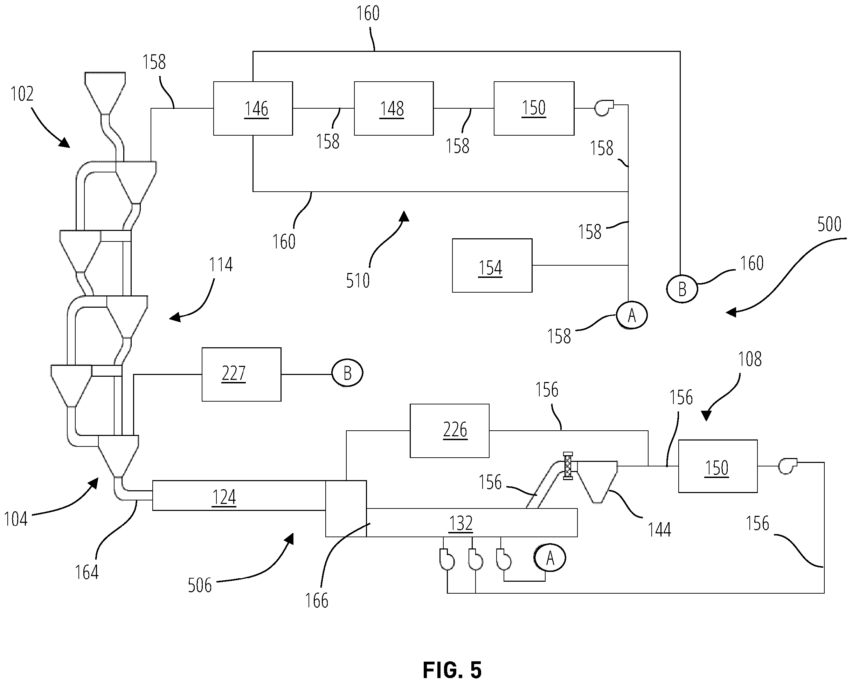

FIG. 5 schematically illustrates, a further embodiment of a cement manufacturing process. The manufacturing system 500 of FIG. 5 includes the carbon dioxide storage 154, the pre-heating section 102, the calcining section 104, a cooling section 108, the waste heat recovery section 510 and a reactor section 506. In contrast to the waste heat recovery section 110 that provides the working fluid 160 to the cooling section 108, the waste heat recovery section 510 feeds the waste heat 158 exiting the waste heat recovery section 510 to the cooling section 108. Furthermore, excess carbon dioxide from the waste heat 158 exiting the waste heat recovery section 510 is stored in carbon dioxide storage 154. Additionally, the remaining waste heat 160 is fed to the second non-combustion heat source 227 in the reactor section 506 to be reheated. This is in contrast to the reactor section 206 of FIG. 2, which has the second cooler exhaust 156 fed to the second non-combustion heat source 227.

During operation of the manufacturing system 500 of FIG. 5, excess carbon dioxide from the waste heat 158 exiting the waste heat recovery section 510 is stored in the carbon dioxide storage 154, and the waste heat 158 is subsequently fed to the cooling section 108 to provide a cooling fluid to the cooler 132. The working fluid 160 exiting the 510 is provided to second non-combustion heat source 227 to be reheated and provided as a heated carbon dioxide to the calciner calcining section 104.

In block 602, routine 600 feeds the raw material to the feed and subsequently to the pre-heating section followed by the calcining section, the chamber in the reactor section and to the cooler in the cooling section, wherein a finished product is formed from the raw material via a calcination or a sintering process. In block 604, routine 600 feeds the heated carbon dioxide from the non-combustion heat source to the outlet end of the chamber and to the calciner in the calcining section. In block 606, routine 600 feeds a first cooler exhaust and a reactor exhaust to the calciner. In block 608, routine 600 wherein the fed heated carbon dioxide and exhaust provides the heat for the calcination or sintering process. In block 610, routine 600 feeds carbon dioxide via the fluid path formed between the pre-heating section, the waste heat recovery section, the cooling section, the reactor section, the calcining section, and back to the pre-heating section, wherein the carbon dioxide, is circulated and used within the fluid path. In block 612, routine 600 capturing generated carbon dioxide in the carbon dioxide storage.

The arrangements disclosed herein uses carbon dioxide in place of air throughout the process to facilitate the capture and reuse of the carbon dioxide in a closed loop system. By using a non-combustion heat source, no other gases beyond those produced during the process enter into the system. While the arrangement illustrated could be used with a combustion heat source, that would introduce additional gasses and would make it more difficult to separate the carbon dioxide. Thus, the use of non-combustion heat sources is preferred. By utilizing the process and arrangement described herein the manufacturing system can perform a calcination process or another process to convert a raw material into a finished product with zero or near zero carbon dioxide emissions. In addition, by using carbon dioxide as the fluid, the additional carbon dioxide naturally produced by the calcination reaction is not further diluted (as is the case when the heat is provided in a flow of air) and can more efficiently be captured without emission to the atmosphere.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A manufacturing system (100) (200) (300) (400) (500) comprising:
a carbon dioxide storage (154);
a pre-heating section (102) comprising a feed (112) and a plurality of pre-heaters (114) arranged in a vertical series, the feed (112) connected to a first in the series of the plurality of pre-heaters;
a waste heat recovery section (110) (310) (510) comprising an auxiliary (148) connected to the first of the plurality of pre-heaters to receive a waste heat to be routed to the auxiliary (148),
a calcining section (104) comprising a calciner (116) connected to the last of the series of the plurality of pre-heaters (114);
a reactor section comprising a chamber (124) and a non-combustion heat source (126) (226) (227), the chamber (124) having an inlet end (128) and an outlet end (130), the outlet end (130) connected to the non-combustion heat source to receive a heated carbon dioxide during operation and the inlet end connected to the calcining section (104) to provide a reactor exhaust (164) to calcining section (104); the calciner (116) connected to the non-combustion heat source to receive the heated carbon dioxide during operation
a cooling section (108) (408) comprising a cooler (132) having an inlet side (136) and an outlet side (138), wherein the inlet side (136) is connected to the outlet end (130) of the chamber (124), the cooling section; and
the carbon dioxide storage is connected to the waste heat recovery section,
a fluid path is formed between the pre-heating section (102), the waste heat recovery section (110) (310)(510), the cooling section (108) (408) , the reactor section (106), the calcining section (104), and back to the pre-heating section (102), wherein a fluid, specifically carbon dioxide, is circulated and used within path while also capturing any generated carbon dioxide.

2. The manufacturing system manufacturing system of claim 1,
wherein the waste heat recovery section (110) (510) comprising a heat exchanger (146) that is arranged between the pre-heating section (102) and the auxiliary (148), thereby the fluid path includes a path from the pre-heating section (102) to the heat exchanger (146) and subsequently to the auxiliary (148), wherein the fluid path is configured for the heat exchanger (146) to receive and cool the waste heat prior to routing it to the auxiliary (14).

3. The manufacturing system of claim 2,
wherein the auxiliary (148) is connected to the heat exchanger (146) to extend the fluid path from the auxiliary (148) to the heat exchanger (146), the fluid path configured for the heat exchangers (146) to receive the waste heat (158) from the auxiliary (148) to be used as a working fluid (160) for the heat exchanger (146) to cool the waste heat from the pre-heating section (102),

4. The manufacturing system of claim 3,
wherein the heat exchanger (146) is connected to the cooler (132) thereby extending the fluid path, of the working fluid, from the heat exchanger to the cooling section (108), the extended fluid path configured to provide the working fluid exiting the heat exchangers (146) as a coolant to the cooling section (108).

5. The manufacturing system of claim 4,
wherein the fluid path includes a path from the cooler (132) to the heat source and to the cooling section (108), wherein the second cooler exhaust (156) is fed to the heat source and fed to the cooling section (108),(168),
wherein the fluid path includes a path for working fluid (160) to be fed into the cooling section (108)(168),
wherein the working fluid (160) is fed into the cooling section (108)(168) at an area that the temperature is cooler than where the second cooler exhaust (156) is fed into the cooling section (108)(168).

6. The manufacturing system of any one of claims 1 to 5,
wherein the reactor section (206) (506) comprises a plurality of non-combustion heat sources including a first non-combustion heat source (226) and a second non-combustion heat source (227),
wherein the first non-combustion heat source (226) is connected to the chamber (124) forming a first heating fluid path from the first non-combustion heat source (226) to the reactor section (206) (506), the heating fluid path configured to provide a heated carbon dioxide from the first non-combustion heat source (226) to the reactor section (206) (506), and
wherein the second non-combustion heat source (227) is connected to the calciner (116) forming a second heating fluid path from the second non-combustion heat source (227) to the calcining section (104), the second heated fluid path configured to provide a heated carbon dioxide from the second non-combustion heat source (227) to the calcining section (104).

7. The manufacturing system of claim 3 or 6,
wherein the heat exchanger (146) is connected to the second non-combustion heat source (227) extending the fluid path, of the working fluid, from the heat exchanger to the reactor section (206) to provide the working fluid exiting the heat exchangers (146) as a carbon dioxide source to be heated for use of the calcining section (104).

8. The manufacturing system of any one of claims 1-4 or 6-7,
wherein at least one of the non-combustion heat sources (126) (226) (227) includes a Turbo Heater.

9. The manufacturing system of any one of claims 1-4 or 6-7,
wherein at least one of the non-combustion heat sources (126) (226) (227) includes an electrical induction heater.

10. The manufacturing system of any one of claims 1-4 or 6-9,
wherein the manufacturing system is a clinker manufacturing system,
wherein the chamber (124) is a rotary kiln (124).

11. The method of operating the manufacturing system of any one of the claim 1 to 10, comprising:
feeding the raw material to the feed and subsequently to the pre-heating section followed by the calcining section, the chamber in the reactor section and to the cooler in the cooling section, wherein a finished product is formed from the raw material via a calcination or a sintering process (602);
feeding the heated carbon dioxide from the non-combustion heat source to the outlet end of the chamber and to the calciner in the calcining section (604);
feeding a first cooler exhaust and a reactor exhaust to the calciner (606), wherein the fed heated carbon dioxide and exhaust provides the heat for the calcination or sintering process (608);
feeding the carbon dioxide via the fluid path formed between the pre-heating section, the waste heat recovery section, the cooling section, the reactor section, the calcining section, and back to the pre-heating section, wherein the carbon dioxide, is circulated and used within the fluid path (610); and
capturing generated carbon dioxide in the carbon dioxide storage (612).

12. The method of operating the manufacturing system of claim 11, comprising:
feeding the combination of the heated carbon dioxide and the exhausts through the pre-heating section to a heat exchanger and subsequently an auxiliary, as the waste heat, in the waste heat recovery section;
feeding the waste heat from the auxiliary to the heat exchanger as a working fluid to cool the waste heat fed to the heat exchanger;
feeding the working fluid from the pre-heating section to the cooler;
feeding a second cooler exhaust to the heat source as a carbon dioxide source to be heated and fed into the manufacturing system; and
feeding the second cooler exhaust into the cooler at a different location that the working fluid is fed, wherein the second cooler exhaust is fed into the cooler at a location that the temperature is hotter in the cooler than where the working fluid is fed.

13. The method of operating the manufacturing system of claim 11, comprising:
feeding the combination of the heated carbon dioxide and the exhausts through the pre-heating section to the auxiliary, as the waste heat, in the waste heat recovery section;
feeding the waste heat from the pre-heating section to the cooler;
feeding a second cooler exhaust to the heat source as a carbon dioxide source to be heated and fed into the manufacturing system;
mixing a second cooler exhaust with the waste heat from the waste heat recovery section; and
feeding the second cooler exhaust into the cooler at a different location that the waste heat is fed, wherein the second cooler exhaust is fed into the cooler at a location that the temperature is hotter in the cooler than where the waste heat is fed.
